# EUROPEAN PATENT APPLICATION

(11) **EP 3 112 016 A1**
(43) Date of publication of application: **04.01.2017**
(21) Application number: 15174980.1
(22) Date of filing: 02.07.2015
(51) Int. Cl.: B01J 13/16, A01N 25/28

(54) **MICROCAPSULES CONTAINING BENZOXAZINONES**

(71) Applicant: BASF SE, 67056 Ludwigshafen am Rhein (DE)
(72) Inventor: STEINBRENNER, Ulrich, 67435 Neustadt (DE); SIMON, Anja, 69469 Weinheim (DE); SHBAITA, Haytham, 10012 Chaoyang District, Beijing (CN); VOLLAND, Thorsten, 67165 Waldsee (DE); GRUBER, Angelika, 67105 Schifferstadt (DE); ZAWIERUCHA, Joseph, Cary, NC 27519 (US); ASHER, Brady Scott, Pittsboro, NC 27312 (US); BOWE, Steven, Apex, NC 27523 (US)
(74) Representative: BASF IP Association

(57) **Abstract**

The present invention relates to microcapsules, having a polyurea shell and a core, wherein the core contains a benzoxazinone of formula (I) 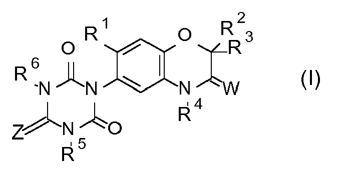 wherein the variables are defined according to the description, compositions comprising them and also a method for controlling undesired vegetation which comprises allowing a herbicidal effective amount of such microcapsules to act on plants, their seed and/or their habitat.

## Description

The present invention relates to a composition comprising microcapsules, which comprise a polyurea shell and a core, wherein the core contains a benzoxazinone of formula (I) as defined below. The invention further relates to a method of preparing said composition by polycondensation of a polyisocyanate and a polyamine; and to a method of controlling undesired vegetation, which comprises allowing the composition comprising a herbicidal active amount of at least one benzoxazinones of the formula I to act on plants, their environment or on seed. The preferred embodiments of the invention mentioned herein below have to be understood as being preferred either independently from each other or in combination with one another.

In crop protection products, it is desirable in principle to increase the specificity and the reliability of the action of active compounds. In particular, it is desirable for the crop protection product to control the harmful plants effectively and, at the same time, to be tolerated by the useful plants in question. It is known that in some cases better crop plant compatibility can be achieved by joint application of specifically acting herbicides with organic active compounds, which act as antidotes or antagonists. Owing to the fact that they can reduce or even prevent damage to the crop plants, they are also referred to as safeners.

Benzoxazinones of formula (I) and a process for their production are known from WO 2010/145992.

It is an ongoing challenge to identify new formulations with improved properties. The herbicidal properties of the known benzoxazinones of formula (I) with regard to the harmful plants, and their compatibility with crop plants are not always entirely satisfactory. It is therefore an object of the present invention to provide herbicidal benzoxazinones of formula (I), which is highly active against unwanted harmful plants, and, at the same time, has good compatibility with useful plants. This and further objects are achieved by the microcapsules containing the benzoxazinones of formula (I) as defined below.

Accordingly, the present invention relates to microcapsules, having a polyurea shell and a core, wherein the core contains a benzoxazinone of formula (I) 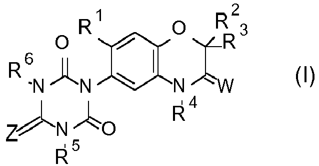 wherein
- R¹: is hydrogen or halogen;
- R²: is halogen;
- R³: is hydrogen or halogen;
- R⁴: is hydrogen, C₁-C₆-alkyl, C₁-C₆-haloalkyl, C₃-C₆-cycloalkyl, C₃-C₆-alkenyl, C₃-C₆-haloalkenyl, C₃-C₆-alkynyl, C₃-C₆-haloalkynyl, C₁-C₆-alkoxy or C₃-C₆-cycloalkyl-C₁-C₆-alkyl;
- R⁵: is hydrogen, NH₂, C₁-C₆-alkyl or C₃-C₆-alkynyl;
- R⁶: is hydrogen or C₁-C₆-alkyl;
- W: is O or S; and
- Z: is O or S.

The present invention also provides microcapsules having a polyurea-shell and a core, wherein the core contains a benzoxazinone of formula (I) and at least one further active compound selected from the group of herbicides B and/or safeners C.

Further the present invention also provides compositions comprising such microcapsules, a process for preparing such microcapsules and a method of controlling undesired vegetation, which comprises allowing a herbicidal effective amount of microcapsules as described herein, to act on plants, their environment or on seed.

Further embodiments of the present invention are evident from the claims, the description and the examples. It is to be understood that the features mentioned above and still to be illustrated below of the subject matter of the invention can be applied not only in the combination given in each particular case but also in other combinations, without leaving the scope of the invention.

As used herein, the terms "controlling" and "combating" are synonyms. As used herein, the terms "undesirable vegetation" and "harmful plants" are synonyms.

The microcapsules have a polyurea shell and a core, where the core contains at least one benzoxazinone of formula (I) as described herein.

Capsules with encapsulation material comprising polyurea are well known and can be prepared by analogy to prior art. They are preferably prepared by an interfacial polymerization process of a suitable polymer wall forming material, such as a polyisocyanate and a polyamine. Interfacial polymerization is usually performed in an aqueous oil-in-water emulsion or suspension of the core material containing dissolved therein at least one part of the polymer wall forming material. During the polymerization, the polymer segregates from the core material to the boundary surface between the core material and water thereby forming the wall of the microcapsule. Thereby an aqueous suspension of the microcapsule material is obtained. Suitable methods for interfacial polymerization processes for preparing microcapsules containing pesticide compounds have been disclosed in prior art.

In general, polyurea is formed by reacting a polyisocyanate having at least two isocyanate groups with a polyamine having at least two primary amino groups to form a polyurea wall material. However, preferred is if either the polyisocyanate or the polyamine or both have more than two reactive - NCO- or NH-groups, respectively. In a further embodiment, the polyurea may be formed by contacting polyisocyanate with water. Also, and preferably, the polyurea results from a reaction of polyisocyanate with both polyamine and water. Preferably, the polyurea shell contains a polyisocyanate and a polyamine in polycondensed form. Suitable polyisocyanates are known, e.g. from US 2010/0248963 A1, paragraphs [0135] to [0158], to which full reference is made. Suitable polyamines are known, e.g. from US 2010/0248963 A1, paragraphs [0159] to [0169], to which full reference is made.

Polyisocyanates may be used individually or as mixtures of two or more polyisocyanates. Suitable polyisocyanates are for example aliphatic isocyanates or aromatic isocyanates. These isocyanates may be present as monomeric or oligomeric isocyanates. The NCO content may be deteremined according to ASTM D 5155-96 A.

Examples of suitable aliphatic diisocyanates include tetramethylene diisocyanate, pentamethylene diisocyanate and hexamethylene diisocyanate as well as cycloaliphatic isocycantates such as isophoronediisocyanate, 1,4-bisisocyanatocyclohexane and bis-(4-isocyanato-cyclohexyl)methane.

Suitable aromatic isocyanates include toluene diisocyanates (TDI: a mixture of the 2,4- and 2,6-isomers), diphenylmethene-4,4'-diisocyanate (MDI), polymethylene polyphenyl isocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate and 4,4',4"-triphenylmethane triisocyanate. Also suitable are higher oligomers of the aforementiende diisocyanates such as the isocyanurates and biurethes of the aforementioned diisocyanates and mixtures thereof with the aforementioned diisocyanates.

In another preferred embodiment, the polyisocyanate is an oligomeric isocyanate, preferably an aromatic, oligomeric isocyanate. Such oligomeric isocyanates may comprise above mentioned aliphatic diisocyanates and/or aromatic isocyanates in oligomerized form. The oligomeric isocyanates have an average functionality in the range of 2,0 to 4,0, preferably 2,1 to 3,2, an more preferably 2,3 to 3,0. Typically, these oligomeric isocyanates have a viscosity (determined according to DIN 53018) in the range from 20 to 1000 mPas, more preferably from 80 to 500 mPas and especially from 150 to 320 mPas. Such oligomeric isocyanates are commercially available, for example from BASF SE under the tradenames Lupranat® M10, Lupranat® M20, Lupranat® M50, Lupranat® M70, Lupranat® M200, Lupranat® MM103 or from Bayer AG as Basonat® A270.

Also suitable are adducts of diisocyanates with polyhydric alcohols, such as ethylene glycol, glycerol and trimethylolpropane, obtained by addition, per mole of polyhydric alcohol, of a number of moles of diisocyanate corresponding to the number of hydroxyl groups of the respective alcohol and mixtures thereof with the aforementioned diisocyanates. In this way, several molecules of diisocyanate are linked through urethane groups to the polyhydric alcohol to form high molecular weight polyisocyanates. A particularly suitable product of this kind, DESMODUR® L (Bayer Corp., Pittsburgh), can be prepared by reacting three moles of toluene diisocyanate with one mole of 2-ethylglycerol (1,1-bismethylolpropane). Further suitable products are obtained by addi-tion of hexamethylene diisocyanate or isophorone diisocyanate with ethylene glycol or glycerol.

Preferred polyisocyanates are isophorone diisocyanate, diphenylmethane-4,4'-diisocyanate, toluene diisocyanates, and oligomeric isocyanates, whereas oligomeric isocyanates are in particular preferred.

Suitable polyamines within the scope of this invention will be understood as meaning in general those compounds that contain two and more amino groups in the molecule, which amino groups may be linked to aliphatic or aromatic moieties.

Examples of suitable aliphatic polyamines are α,ω-diamines of the formula H₂N-(CH₂)ₚ-NH₂, wherein p is an integer from 2 to 6. Exemplary of such diamines are ethylene diamine, propylene-1,3-diamine, tetramethylene diamine, pentamethylene diamine and hexamethylene diamine. A preferred diamine is hexamethylene diamine. Further suitable aliphatic polyamines are polyethylenimines of the formula H₂N-(CH₂-CH₂-NH)_{q}-H, wherein q is an integer from 2 to 20, preferably 3 to 5. Representative examples of such polyethylenimines are diethylene triamine, triethylene tetramine, tetraethylene pentamine and pentaethylene hexamine. Further suitable aliphatic polyamines are dioxaalkane-α,ω-diamines, such as 4,9-dioxadodecane-1,12-diamine of the formula H₂N-(CH₂)₃O-(CH₂)₄O-(CH₂)₃-NH₂.

Examples of suitable aromatic polyamines are 1,3-phenylene diamine, 2,4- and 2,6-toluene diamine, 4,4'-diaminodiphenyl methane, 1,5-diaminonaphthalene, 1,3,5-triaminobenzene, 2,4,6-triaminotoluene, 1,3,6-triaminonaphthalene, 2,4,4'-triaminodiphenyl ether, 3,4,5-triamino-1,2,4-triazole and 1,4,5,8-tetraaminoanthraquinone.

Those polyamines which are insoluble or insufficiently soluble in water may be used as their hydrochloride salts.

Polyamines, such as those mentioned above, may be used individually or as mixtures of two or more polyamines. Preferred polyamine is a polyethylenimine, such as tetraethylene pentamine. The relative amounts of each complementary wall-forming component will vary with their equivalent weights. In general, approximately stoichiometric amounts are preferred, while an excess of one component may also be employed, especially an excess of polyisocyanate. The total amount of wall-forming components approximately corresponds to the total amount of polymeric wall-forming materials.

The microcapsules contain up to 15 wt%, preferably up to 10 wt% and in particular up to 6 wt% of shell (e.g. based on the total amount of benzoxazinone of formula (I) and optionally at least one herbicides B and/or safeners C, all solvents in the core, polyisocyate, and polyamine). The microcapsules contain usually at least 0.5 wt%, preferably at least 1.5 wt% shell.

The average particle size D₅₀ of the microcapsules (determined according to ISO 13320, Particle Size Analysis - Laser Diffraction Methods, December, 1st, 2009) is 0.5 to 100 µm, preferably 1 to 20 µm, more preferably 1 to 12 µm, and especially 2 to 10 µm.

The core comprises at least a benzoxazinone of formula (I) as defined herein.

If the benzoxazinones of formula (I) as described herein are capable of forming geometrical isomers, for example E/Z isomers, it is possible to use both, the pure isomers and mixtures thereof, in the compositions according to the invention.

If the benzoxazinones of formula (I) as described herein have one or more centers of chirality and, as a consequence, are present as enantiomers or diastereomers, it is possible to use both, the pure enantiomers and diastereomers and their mixtures, in the compositions according to the invention.

The organic moieties mentioned in the definition of the variables R¹ to R⁶, are - like the term halogen - collective terms for individual enumerations of the individual group members. The term halogen denotes in each case fluorine, chlorine, bromine or iodine. All hydrocarbon chains, i.e. all alkyl, can be straight-chain or branched, the prefix Cₙ-Cₘ denoting in each case the possible number of carbon atoms in the group.

Examples of such meanings are:
- C₁-C₄-alkyl and also the C₁-C₄-alkyl moieties of C₃-C₆-cycloalkyl-C₁-C₄-alkyl: for example CH₃, C₂H₅, n-propyl, and CH(CH₃)₂ n-butyl, CH(CH₃)-C₂H₅, CH₂-CH(CH₃)₂ and C(CH₃)₃;
- C₁-C₆-alkyl and also the C₁-C₆-alkyl moieties of C₁-C₆-alkyoxy-C₁-C₆-alkyl: C₁-C₄-alkyl as mentioned above, and also, for example, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl or 1-ethyl-2-methylpropyl, preferably methyl, ethyl, n-propyl, 1-methylethyl, n-butyl, 1,1-dimethylethyl, n-pentyl or n-hexyl;
- C₁-C₄-haloalkyl: a C₁-C₄-alkyl radical as mentioned above which is partially or fully substituted by fluorine, chlorine, bromine and/or iodine, for example, chloromethyl, dichloromethyl, trichloromethyl, fluoromethyl, difluoromethyl, trifluoromethyl, chlorofluoromethyl, dichlorofluoromethyl, chlorodifluoromethyl, bromomethyl, iodomethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, a C₁-C₃-haloalkyl radical as mentioned above, and also, for example, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl, nonafluorobutyl, 1,1,2,2,-tetrafluoroethyl and 1-trifluoromethyl-1,2,2,2-tetrafluoroethyl;
- C₁-C₆-haloalkyl: C₁-C₄-haloalkyl as mentioned above, and also, for example, 5-fluoropentyl, 5-chloropentyl, 5-bromopentyl, 5-iodopentyl, undecafluoropentyl, 6-fluorohexyl, 6-chlorohexyl, 6-bromohexyl, 6-iodohexyl and dodecafluorohexyl;
- C₃-C₆-cycloalkyl and also the cycloalkyl moieties of C₃-C₆-cycloalkyl-C₁-C₄-alkyl: monocyclic saturated hydrocarbons having 3 to 6 ring members, such as cyclopropyl, cyclobutyl, cyclopentyl and cyclohexyl;
- C₃-C₆-alkenyl: for example 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl;
- C₃-C₆-haloalkenyl: a C₃-C₆-alkenyl radical as mentioned above which is partially or fully substituted by fluorine, chlorine, bromine and/or iodine, for example 2-chloroprop-2-en-1-yl, 3-chloroprop-2-en-1-yl, 2,3-dichloroprop-2-en-1-yl, 3,3-dichloroprop-2-en-1-yl, 2,3,3-trichloro-2-en-1-yl, 2,3-dichlorobut-2-en-1-yl, 2-bromoprop-2-en-1-yl, 3-bromoprop-2-en-1-yl, 2,3-dibromoprop-2-en-1-yl, 3,3-dibromoprop-2-en-1-yl, 2,3,3-tribromo-2-en-1-yl or 2,3-dibromobut-2-en-1-yl;
- C₃-C₆-alkynyl: for example 1-propynyl, 2-propynyl, 1-butynyl, 2-butynyl, 3-butynyl, 1-methyl-2-propynyl, 1-pentynyl, 2-pentynyl, 3-pentynyl, 4-pentynyl, 1-methyl-2-butynyl, 1-methyl-3-butynyl, 2-methyl-3-butynyl, 3-methyl-1-butynyl, 1,1-dimethyl-2-propynyl, 1-ethyl-2-propynyl, 1-hexynyl, 2-hexynyl, 3-hexynyl, 4-hexynyl, 5-hexynyl, 1-methyl-2-pentynyl, 1-methyl-3-pentynyl, 1-methyl-4-pentynyl, 2-methyl-3-pentynyl, 2-methyl-4-pentynyl, 3-methyl-1-pentynyl, 3-methyl-4-pentynyl, 4-methyl-1-pentynyl, 4-methyl-2-pentynyl, 1,1-dimethyl-2-butynyl, 1,1-dimethyl-3-butynyl, 1,2-dimethyl-3-butynyl, 2,2-dimethyl-3-butynyl, 3,3-dimethyl-1-butynyl, 1-ethyl-2-butynyl, 1-ethyl-3-butynyl, 2-ethyl-3-butynyl and 1-ethyl-1-methyl-2-propynyl;
- C₃-C₆-haloalkynyl: a C₃-C₆-alkynyl radical as mentioned above which is partially or fully substituted by fluorine, chlorine, bromine and/or iodine, for example 1,1-difluoroprop-2-yn-1-yl, 3-chloroprop-2-yn-1-yl, 3-bromoprop-2-yn-1-yl, 3-iodoprop-2-yn-1-yl, 4-fluorobut-2-yn-1-yl, 4-chlorobut-2-yn-1-yl, 1,1-difluorobut-2-yn-1-yl, 4-iodobut-3-yn-1-yl, 5-fluoropent-3-yn-1-yl, 5-iodopent-4-yn-1-yl, 6-fluorohex-4-yn-1-yl or 6-iodohex-5-yn-1-yl;
- C₁-C₄-alkoxy and also the C₁-C₄-alkoxy moieties of hydroxycarbonyl-C₁-C₄-alkoxy, C₁-C₆-alkoxycarbonyl-C₁-C₄-alkoxy: for example methoxy, ethoxy, propoxy, 1-methylethoxy butoxy, 1-methylpropoxy, 2-methylpropoxy and 1,1-dimethylethoxy;
- C₁-C₆-alkoxy and also the C₁-C₆-alkoxy moieties of C₁-C₆-alkoxycarbonyl-C₁-C₄-alkoxy: C₁-C₄-alkoxy as mentioned above, and also, for example, pentoxy, 1-methylbutoxy, 2-methylbutoxy, 3-methoxylbutoxy, 1,1-dimethylpropoxy, 1,2-dimethylpropoxy, 2,2-dimethylpropoxy, 1-ethylpropoxy, hexoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy.

According to a preferred embodiment of the invention preference is also given to those benzoxazinones of formula (I), wherein the variables, either independently of one another or in combination with one another, have the following meanings:
- R¹: is hydrogen;
is also preferably halogen, particularly preferred F or Cl, especially preferred F;
- R²: is F;
- R³: is hydrogen or F, preferably hydrogen;
is also preferably F;
- R⁴: is C₃-C₆-alkynyl or C₃-C₆-halolkynyl, preferably C₃-alkynyl or C₃-halolkynyl, particularly preferred CH₂C≡CH, CH₂C≡CCl or CH₂C≡CBr;
is also preferably C₃-C₆-alkynyl or C₃-C₆-cycloalkyl-C₁-C₆-alkyl, particularly preferred propargyl or cyclopropylmethyl;
is also preferably C₃-C₆-alkynyl, preferably C₃-alkynyl; particularly preferred CH₂C≡CH;
is also preferably C₃-C₆-halolkynyl, preferably C₃-halolkynyl, particularly preferred CH₂C≡CCl or CH₂C≡CBr;
- R⁵: is NH₂, C₁-C₆-Alkyl or C₃-C₆-alkynyl; preferably C₁-C₆-alkyl; more preferably C₁-C₄-alkyl; most preferably CH₃;
- R⁶: is C₁-C₆-alkyl; preferably C₁-C₄-alkyl; most preferably CH₃;
- W: is O,
is also preferably S;
- Z: is O,
is also preferably S.

Particular preference is given to the benzoxazinones of the formula (I.a) (corresponds to formula I wherein R² is F, R⁵ and R⁶ are CH₃, W is O and Z is S), 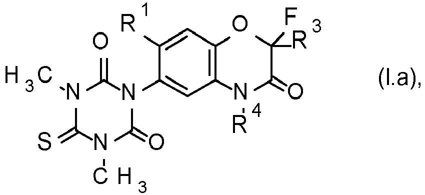 wherein the variables R¹, R³, and R⁴ have the meanings, in particular the preferred meanings, as defined above;
most preference to the benzoxazinones of the formulae (I.a.1) to (I.a.54) of Table A listed below, in which the variables R¹, R³ and R⁴ together have the meanings given in one row of Table A; and where the definitions of the variables R¹,R³ and R⁴ are of particular importance for the compounds according to the invention not only in combination with one another but in each case also on their own:

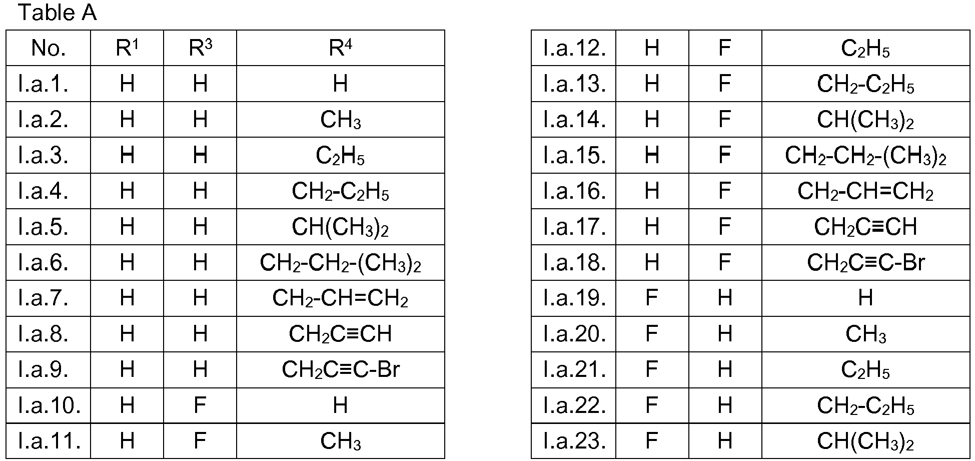

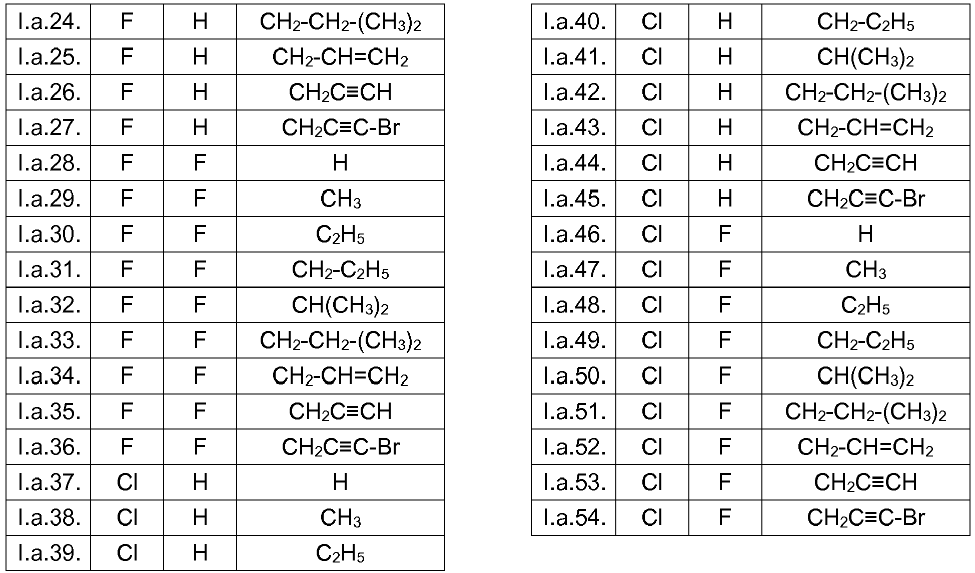

Especially preferred is the benzoxazinone of formula (I.a.35) as defined above

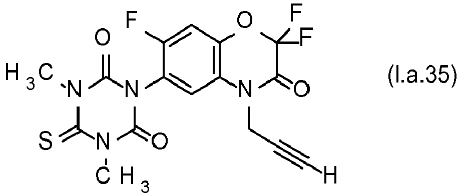

According to a particular preferred embodiment the microcapsules according to the invention contain at least the benzoxazinone of formula I.a.35.

The benzoxazinones of formula (I) according to the invention can be prepared by standard processes of organic chemistry, for example as disclosed in WO 2010/145992.

In case the benzoxazinone of formula (I) is present in solid form (e.g. as suspension or suspoemulsion), any polymorph form may be used. Suitable polymorph of the benzoxazinone of formula (I) are disclosed in WO 13/174693 and WO 13/174694.

To broaden the spectrum of action and to achieve synergistic effects, besides the benzoxazinone of formula (I), the microcapsules or compositions comprising such microcapsules described herein may contain additionally many members of other herbicidal active substance groups or safeners. With regard to such combinations, full reference is made to WO 2010/145992.

Suitable components for mixtures are, for example, 1,2,4-thiadiazoles, 1,3,4-thiadiazoles, amides, aminophosphoric acid and its derivatives, aminotriazoles, anilides, (het)aryloxyalkanoic acids and their derivatives, benzoic acid and its derivatives, benzothiadiazinones, 2-aroyl-1,3-cyclohexanediones, 2-hetaroyl-1,3-cyclohexanediones, hetaryl aryl ketones, benzylisoxazolidinones, meta-CF₃-phenyl derivatives, carbamates, quinolinecarboxylic acid and its derivatives, chloroacetanilides, cyclohexenone oxime ether derivatives, diazines, dichloropropionic acid and its derivatives, dihydrobenzofurans, dihydrofuran-3-ones, dinitroanilines, dinitrophenols, diphenyl ethers, dipyridyls, halocarboxylic acids and their derivatives, ureas, 3-phenyluracils, imidazoles, imidazolinones, N-phenyl-3,4,5,6-tetrahydrophthalimides, oxadiazoles, oxiranes, phenols, aryloxy- and hetaryloxyphenoxypropionic esters, phenylacetic acid and its derivatives, 2-phenylpropionic acid and its derivatives, pyrazoles, phenylpyrazoles, pyridazines, pyridinecarboxylic acid and its derivatives, pyrimidyl ethers, sulfonamides, sulfonylureas, triazines, triazinones, triazolinones, triazolecarboxamides, uracils, phenyl pyrazolines and isoxazolines and derivatives thereof.

In one embodiment of the present invention the microcapsules or compositions comprising such microcapsules according to the present invention comprise at least one benzoxazinone of formula I (compound A) and at least one further active compound selected from herbicides B, preferably herbicides B of class b1) to b15), and safeners C (compound C).

In another embodiment of the present invention the microcapsules or compositions comprising such microcapsules according to the present invention comprise at least one benzoxazinone of formula I and at least one further active compound B (herbicide B).

The at least one further active compound selected from herbicides B, preferably herbicides B of class b1) to b15), and safeners C (compound C) might be present in the microcapsule, e.g. in the core of the microcapsule, or might be present outside the microcapsule.

According to one embodiment of the present invention, the core of the microcapsule contains, besides the benzoxazinone of formula (I), additionally at least one further active compound selected from the group of herbicides B and/or safeners C, preferably at least one further active compound selected from the group of herbicides B.

According to another embodiment of the present invention, the composition comprising microcapsules as described herein additionally comprises at least one further active compound selected from the group of herbicides B and/or safeners C, preferably at least one further active compound selected from the group of herbicides B, outside the microcapsules.

According to another embodiment of the present invention, the composition comprises microcapsules containing, besides the benzoxazinone of formula (I), additionally at least one further active compound selected from the group of herbicides B and/or safeners C, preferably at least one further active compound selected from the group of herbicides B as described herein; and additionally
at least one further active compound selected from the group of herbicides B and/or safeners C, preferably at least one further active compound selected from the group of herbicides B, outside the microcapsules.

The further active compound B (herbicide B) is preferably selected from the herbicides of class b1) to b15):
b1) lipid biosynthesis inhibitors;
b2) acetolactate synthase inhibitors (ALS inhibitors);
b3) photosynthesis inhibitors;
b4) protoporphyrinogen-IX oxidase inhibitors,
b5) bleacher herbicides;
b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitose inhibitors;
b10) inhibitors of the synthesis of very long chain fatty acids (VLCFA inhibitors);
b11) cellulose biosynthesis inhibitors;
b12) decoupler herbicides;
b13) auxin herbicides;
b14) auxin transport inhibitors; and
b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methyl azide, methyl bromide, methyl-dymron, methyl iodide, MSMA, oleic acid, oxaziclomefone, pelargonic acid, pyributicarb, quinoclamine, triaziflam, tridiphane and 6-chloro-3-(2-cyclopropyl-6-methylphenoxy)-4-pyridazinol (CAS 499223-49-3) and its salts and esters.

According to the present invention the at least one herbicide B is preferably selected from herbicides of class b2, b3, b4, b5, b6, b9 and b10, particularly preferred selected from the herbicides of class b4, b6, b9 and b10, especially preferred selected from the herbicides of class b4, b6 and b10; more preferred selected from the herbicides of class b10.

According to a first embodiment of the invention the compositions contain at least one inhibitor of the lipid biosynthesis (herbicide b1). These are compounds which inhibit lipid biosynthesis. Inhibition of the lipid biosynthesis can be affected either through inhibition of acetyl CoA carboxylase (hereinafter termed ACC herbicides) or through a different mode of action (hereinafter termed non-ACC herbicides). The ACC herbicides belong to the group A of the HRAC classification system whereas the non-ACC herbicides belong to the group N of the HRAC classification.

According to a second embodiment of the invention the compositions contain at least one ALS inhibitor (herbicide b2). The herbicidal activity of these compounds is based on the inhibition of acetolactate synthase und thus on the inhibiton of the branched chain aminoacid biosynthesis. These inhibitors belong to the group B of the HRAC classification system.

According to a third embodiment of the invention the compositions contain at least one inhibitor of photosynthesis (herbicide b3). The herbicidal activity of these compounds is based either on the inhibition of the photosystem II in plants (so-called PSII inhibitors, groups C1, C2 and C3 of HRAC classification) or on diverting the electron transfer in photosystem I in plants (so-called PSI inhibitors, group D of HRAC classification) and thus on an inhibition of photosynthesis. Amongst these, PSII inhibitors are preferred.

According to a fourth embodiment of the invention the compositions contain at least one inhibitor of protoporphyrinogen-IX-oxidase (herbicide b4). The herbicidal activity of these compounds is based on the inhibition of the protoporphyrinogen-IX-oxidase. These inhibitors belong to the group E of the HRAC classification system.

According to a fifth embodiment of the invention the compositions contain at least one bleacher-herbicide (herbicide b5). The herbicidal activity of these compounds is based on the inhibition of the carotinoid biosynthesis. These include compounds which inhibit carotinoid biosynthesis by inhibition of phytoene desaturase (so-called PDS inhibitors, group F1 of HRAC classification), compounds which inhibit the 4-hydroxyphenylpyruvat-dioxygenase (HPPD inhibitors, group F2 of HRAC classification) and compounds which inhibit carotinoid biosynthesis by an unknown mode of action (bleacher - unknown target, group F3 of HRAC classification).

According to a sixth embodiment of the invention the compositions contain at least one EPSP synthase inhibitor (herbicide b6). The herbicidal activity of these compounds is based on the inhibition of enolpyruvyl shikimate 3-phosphate synthase und thus on the inhibition of the aminoacid biosynthesis in plants. These inhibitors belong to the group G of the HRAC classification system.

According to a seventh embodiment of the invention the compositions contain at least one glutamin synthetase inhibitor (herbicide b7). The herbicidal activity of these compounds is based on the inhibition of glutamin synthetase und thus on the inhibition of the aminoacid biosynthesis in plants. These inhibitors belong to the group H of the HRAC classification system.

According to an eighth embodiment of the invention the compositions contain at least one DHP synthase inhibitor (herbicide b8). The herbicidal activity of these compounds is based on the inhibition of 7,8-dihydropteroate synthetase. These inhibitors belong to the group I of the HRAC classification system.

According to a ninth embodiment of the invention the compositions contain at least one mitose inhibitor (herbicide b9). The herbicidal activity of these compounds is based on the disturbance or inhibition of microtubule formation or organization and thus on the mitosis inhibition. These inhibitors belong to the groups K1 and K2 of the HRAC classification system. Among these, compounds of the group K1, in particular dinitroanilines, are preferred.

According to a tenth embodiment of the invention the compositions contain at least one VLCFA inhibitor (herbicide b10). The herbicidal activity of these compounds is based on the inhibition of the synthesis of very long chain fatty acids and thus on the disturbance or inhibition of cell division in plants. These inhibitors belong to the group K3 of the HRAC classification system.

According to an eleventh embodiment of the invention the compositions contain at least one cellulose biosynthesis inhibitor (herbicide b11). The herbicidal activity of these compounds is based on the inhibition of the biosynthesis of cellulose and thus on the inhibition of the synthesis of cell walls in plants. These inhibitors belong to the group L of the HRAC classification system.

According to a twelfth embodiment of the invention the compositions contain at least one decoupler herbicide (herbicide b12). The herbicidal activity of these compounds is based on the disruption of the cell membrane. These inhibitors belong to the group M of the HRAC classification system.

According to a thirtheenth embodiment of the invention the compositions contain at least one auxin herbicide (herbicide b13). These include compounds which act like auxins, i.e. plant hormones, and inhibit the growth of the plants. These compounds belong to the group O of the HRAC classification system.

According to a fourteenth embodiment of the invention the compositions contain at least one auxin transport inhibitor (herbicide b14). The herbicidal activity of these compounds is based on the inhibition of the auxin transport in plants. These compounds belong to the group P of the HRAC classification system.
As to the given mechanisms of action and classification of the active substances, see e.g. "HRAC, Classification of Herbicides According to Mode of Action",
http://www.plantprotection.org/hrac/MOA.html).

Examples of herbicides B which can be used according to the present invention are:
b1) from the group of the lipid biosynthesis inhibitors:
   ACC-herbicides such as alloxydim, alloxydim-sodium, butroxydim, clethodim, clodinafop, clodinafop-propargyl, cycloxydim, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, pinoxaden, profoxydim, propaquizafop, quizalofop, quizalofop-ethyl, quizalofop-tefuryl, quizalofop-P, quizalofop-P-ethyl, quizalofop-P-tefuryl, sethoxydim, tepraloxydim and tralkoxydim, and non ACC herbicides such as benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate and vernolate;
b2) from the group of the ALS inhibitors:
   Sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron, imidazolinones such as imazamethabenz, imazamethabenz-methyl, imazamox, imazapic, imazapyr, imazaquin and imazethapyr, triazolopyrimidine herbicides and sulfonanilides such as cloransulam, cloransulam-methyl, diclosulam, flumetsulam, florasulam, metosulam, penoxsulam, pyrimisulfan and pyroxsulam,
      pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8) and sulfonylaminocarbonyl-triazolinone herbicides such as flucarbazone, flucarbazone-sodium, propoxycarbazon, propoxycarbazon- sodium, thiencarbazone and thiencarbazone-methyl. Among these, a preferred embodiment of the invention relates to those compositions comprising at least one imidazolinone herbicide;
b3) from the group of the photosynthesis inhibitors:
   amicarbazone, inhibitors of the photosystem II, e.g. triazine herbicides, including of chlorotriazine, triazinones, triazindiones, methylthiotriazines and pyridazinones such as ametryn, atrazine, chloridazone, cyanazine, desmetryn, dimethametryn,hexazinone, metribuzin, prometon, prometryn, propazin, simazin, simetryn, terbumeton, terbuthylazin, terbutryn and trietazin, aryl urea such as chlorobromuron, chlorotoluron, chloroxuron, dimefuron, diuron, fluometuron, isoproturon, isouron, linuron, metamitron, methabenzthiazuron, metobenzuron, metoxuron, monolinuron, neburon, siduron, tebuthiuron and thiadiazuron, phenyl carbamates such as desmedipham, karbutilat, phenmedipham, phenmedipham-ethyl, nitrile herbicides such as bromofenoxim, bromoxynil and its salts and esters, ioxynil and its salts and esters, uraciles such as bromacil, lenacil and terbacil, and bentazon and bentazon-sodium, pyridatre, pyridafol, pentanochlor and propanil and inhibitors of the photosystem I such as diquat, diquat-dibromide, paraquat, paraquat-dichloride and paraquat-dimetilsulfate. Among these, a preferred embodiment of the invention relates to those compositions comprising at least one aryl urea herbicide. Among these, likewise a preferred embodiment of the invention relates to those compositions comprising at least one triazine herbicide. Among these, likewise a preferred embodiment of the invention relates to those compositions comprising at least one nitrile herbicide;
b4) from the group of the protoporphyrinogen-IX oxidase inhibitors:
   acifluorfen, acifluorfen-sodium, azafenidin, bencarbazone, benzfendizone, bifenox, butafenacil, carfentrazone, carfentrazone-ethyl, chlomethoxyfen, cinidon-ethyl, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H-*pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H-*pyrazole-1-carboxamide (CAS 45100-03-7) and 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione;
b5) from the group of the bleacher herbicides:
   PDS inhibitors: beflubutamid, diflufenican, fluridone, flurochloridone, flurtamone, norflurazon, picolinafen, and 4-(3-trifluoromethylphenoxy)-2-(4-trifluoromethylphenyl)pyrimidine (CAS 180608-33-7), HPPD inhibitors: benzobicyclon, benzofenap, isoxaflutole, mesotrione, pyrasulfotole, pyrazolynate, pyrazoxyfen, sulcotrione, tefuryltrione, tembotrione, topramezone and bicyclopyrone, bleacher, unknown target: aclonifen, amitrole, clomazone and flumeturon;
b6) from the group of the EPSP synthase inhibitors:
   glyphosate, glyphosate-isopropylammonium and glyphosate-trimesium (sulfosate);
b7) from the group of the glutamine synthase inhibitors:
   bilanaphos (bialaphos), bilanaphos-sodium, glufosinate, glufosinate-P and glufosinate-ammonium;
b8) from the group of the DHP synthase inhibitors:
   asulam;
b9) from the group of the mitose inhibitors:
   compounds of group K1: dinitroanilines such as benfluralin, butralin, dinitramine, ethalfluralin, fluchloralin, oryzalin, pendimethalin, prodiamine and trifluralin, phosphoramidates such as amiprophos, amiprophos-methyl, and butamiphos, benzoic acid herbicides such as chlorthal, chlorthal-dimethyl, pyridines such as dithiopyr and thiazopyr, benzamides such as propyzamide and tebutam; compounds of group K2: chlorpropham, propham and carbetamide, among these, compounds of group K1, in particular dinitroanilines are preferred;
b10) from the group of the VLCFA inhibitors:
   chloroacetamides such as acetochlor, alachlor, butachlor, dimethachlor, dimethenamid, dimethenamid-P, metazachlor, metolachlor, metolachlor-S, pethoxamid, pretilachlor, propachlor, propisochlor and thenylchlor, oxyacetanilides such as flufenacet and mefenacet, acetanilides such as diphenamid, naproanilide and napropamide, tetrazolinones such fentrazamide, and other herbicides such as anilofos, cafenstrole, fenoxasulfone, ipfencarbazone, piperophos, pyroxasulfone and
      isoxazoline compounds of the formula II, 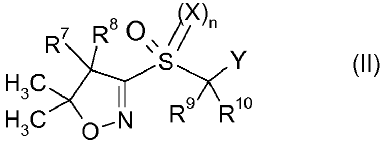 wherein R⁷, R⁸, R⁹, R¹⁰, W, Z and n have the following meanings:
      - R⁷, R⁸, R⁹, R¹⁰: independently of one another hydrogen, halogen or C₁-C₄-alkyl;
      - X: oxygen or NH;
      - Y: phenyl or monocyclic 5-, 6-, 7-, 8-, 9- or 10-membered heterocyclyl containing, in addition to carbon ring members one, two or three same or different heteroatoms selected from oxygen, nitrogen and sulfur as ring members, wherein phenyl and heterocyclyl are unsubstituted or carry 1, 2 or 3 substituents R^{yy} selected from halogen, C₁-C₄-alkyl, C₁-C₄-alkoxy, C₁-C₄-haloalkyl and C₁-C₄-haloalkoxy;
      preferably phenyl or 5- or 6-membered aromatic heterocyclyl (hetaryl) which contains, in addition to carbon ring members, one, two or three nitrogen atoms as ring members, wherein phenyl and hetaryl are unsubstituted or carry 1, 2 or 3 substituents R^{yy}; and
      - n: zero or one;
      among the isoxazoline compounds of the formula II, preference is given to isoxazoline compounds of the formula II, wherein
      - R⁷, R⁸, R⁹, R¹⁰: independently of one another are H, F, Cl or methyl;
      - X: is oxygen;
      - n: is 0 or 1; and
      - Y: is phenyl, pyrazolyl or 1,2,3-triazolyl, wherein the three last-mentioned radicals are unsubstituted or carry one, two or three substituents R^{yy}, especially one of the following radicals 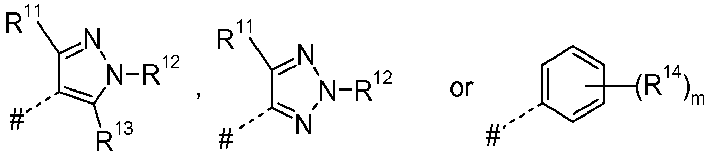 wherein
      - R¹¹: is halogen, C₁-C₄-alkyl or C₁-C₄-haloalkyl;
      - R¹²: is C₁-C₄-alkyl;
      - R¹³: is halogen, C₁-C₄-alkoxy or C₁-C₄-haloalkoxy;
      - R¹⁴: is halogen, C₁-C₄-alkyl, C₁-C₄-haloalkyl or C₁-C₄-haloalkoxy;
      - m: is 0, 1, 2 or 3; and
      - #: denotes the point of attachment to the group CR¹³R¹⁴;
      among the isoxazoline compounds of the formula II, particular preference is given to those isoxazoline compounds of the formula II, wherein
      - R⁷: is hydrogen;
      - R⁸: is fluorine;
      - R⁹: is hydrogen or fluorine;
      - R¹⁰: is hydrogen or fluorine;
      - X: is oxygen;
      - Y: is one of the radicals of the formulae Y¹, Y², Y³ or Y⁴ 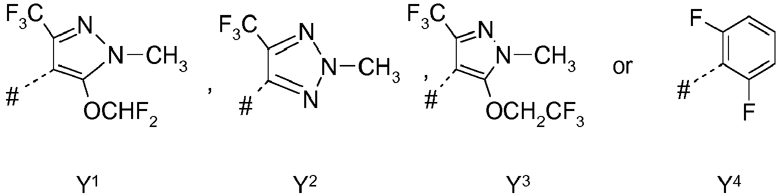 wherein # denotes the point of attachment to the group CR⁹R¹⁰;
      - n: is zero or 1, in particular 1; and
      among these, especially prefered are the isoxazoline compounds of the formulae II.1, II.2, II.3, II.4, II.5, II.6, II.7, II.8 and II.9 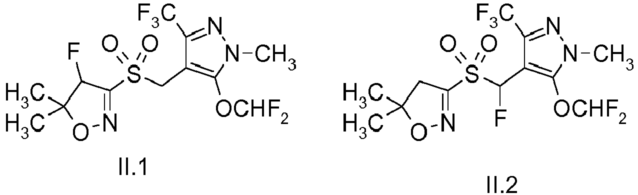 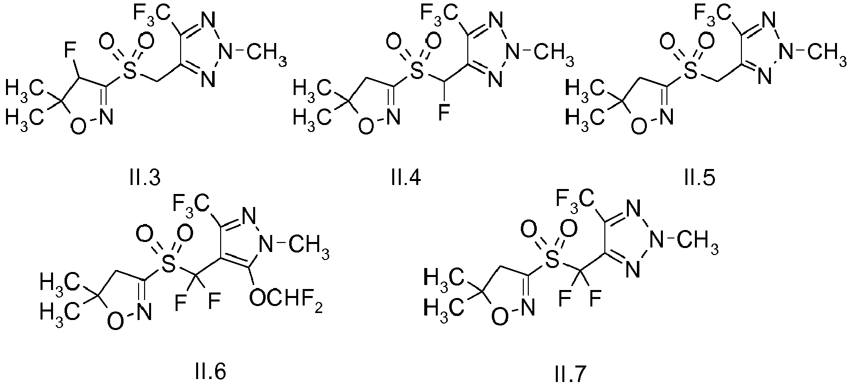 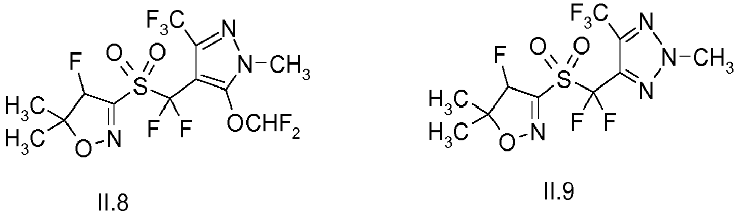 the isoxazoline compounds of the formula II are known in the art, e.g. from WO 2006/024820, WO 2006/037945, WO 2007/071900 and WO 2007/096576;
      among the VLCFA inhibitors, preference is given to chloroacetamides and oxyacetamides, especially to pyroxasulfone;
b11) from the group of the cellulose biosynthesis inhibitors:
   chlorthiamid, dichlobenil, flupoxam, isoxaben, 1-Cyclohexyl-5-pentafluorphenyloxy-1⁴-[1,2,4,6]thiatriazin-3-ylamine and piperazine compounds of formula III, 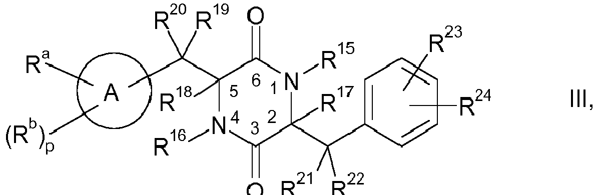 in which
      - A: is phenyl or pyridyl where R^{a} is attached in the ortho-position to the point of attachment of A to a carbon atom;
      - R^{a}: is CN, NO₂, C₁-C₄-alkyl, D-C₃-C₆-cycloalkyl, C₁-C₄-haloalkyl, C₁-C₄-alkoxy, C₁-C₄-haloalkoxy, O-D-C₃-C₆-cycloalkyl, S(O)_{q}R^{y}, C₂-C₆-alkenyl, D-C₃-C₆-cycloalkenyl, C₃-C₆-alkenyloxy, C₂-C₆-alkynyl, C₃-C₆-alkynyloxy, NR^{A}R^{B}, tri-C₁-C₄-alkylsilyl, D-C(=O)-R^{a1}, D-P(=O)(R^{a1})₂, phenyl, naphthyl, a 3- to 7-membered monocyclic or 9- or 10-membered bicyclic saturated, unsaturated or aromatic heterocycle which is attached via carbon or nitrogen, which contains 1, 2, 3 or 4 heteroatoms selected from the group consisting of O, N and S, and which may be partially or fully substituted by groups R^{aa} and/or R^{a1}, and, if R^{a} is attached to a carbon atom, additionally halogen;
      R^{y} is C₁-C₆-alkyl, C₃-C₄-alkenyl, C₃-C₄-alkynyl, NR^{A}R^{B} or C₁-C₄-haloalkyl and q is 0, 1 or 2;
      R^{A},R^{B} independently of one another are hydrogen, C₁-C₆-alkyl, C₃-C₆-alkenyl and C₃-C₆-alkynyl; together with the nitrogen atom to which they are attached, R^{A},R^{B} may also form a five- or six-membered saturated, partially or fully unsaturated ring which, in addition to carbon atoms, may contain 1, 2 or 3 heteroatoms selected from the group consisting of O, N and S, which ring may be substituted by 1 to 3 groups R^{aa};
      D is a covalent bond, C₁-C₄-alkylene, C₂-C₆-alkenyl or C₂-C₆-alkynyl;
      R^{a1} is hydrogen, OH, C₁-C₈-Alkyl, C₁-C₄-haloalkyl, C₃-C₆-cycloalkyl, C₂-C₈-alkenyl, C₅-C₆-cycloalkenyl, C₂-C₈-alkynyl, C₁-C₆-alkoxy, C₁-C₄-haloalkoxy, C₃-C₈-alkenyloxy, C₃-C₈-alkynyloxy, NR^{A}R^{B}, C₁-C₆-alkoxyamino, C₁-C₆-alkylsulfonylamino, C₁-C₆-alkylaminosulfonylamino, [di-(C₁-C₆)alkylamino]sulfonylamino, C₃-C₆-alkenylamino, C₃-C₆-alkynylamino, N-(C₂-C₆-alkenyl)-N-(C₁-C₆-alkyl)amino, N-(C₂-C₆-alkynyl)-N-(C₁-C₆-alkyl)amino, N-(C₁-C₆-alkoxy)-N-(C₁-C₆-alkyl)amino, N-(C₂-C₆-alkenyl)-N-(C₁-C₆-alkoxy)amino, N-(C₂-C₆-alkynyl)-N-(C₁-C₆-alkoxy)-amino, C₁-C₆-alkylsulfonyl, tri-C₁-C₄-alkylsilyl, phenyl, phenoxy, phenylamino or a 5- or 6-membered monocyclic or 9- or 10-membered bicyclic heterocycle which contains 1, 2, 3 or 4 heteroatoms selected from the group consisting of O, N and S, where the cyclic groups are unsubstituted or substituted by 1, 2, 3 or 4 groups R^{aa};
      R^{aa} is halogen, OH, CN, NO₂, C₁-C₄-alkyl, C₁-C₄-haloalkyl, C₁-C₄-alkoxy, C₁-C₄-haloalkoxy, S(O)_{q}R^{y}, D-C(=O)-R^{a1} and tri-C₁-C₄-alkylsilyl;
      - R^{b}: independently of one another are hydrogen, CN, NO₂, halogen, C₁-C₄-alkyl, C₁-C₄-haloalkyl, C₂-C₄-alkenyl, C₃-C₆-alkynyl, C₁-C₄-alkoxy, C₁-C₄-haloalkoxy, benzyl or S(O)_{q}R^{y},
      R^{b} together with the group R^{a} or R^{b} attached to the adjacent ring atom may also form a five- or six-membered saturated or partially or fully unsaturated ring which, in addition to carbon atoms, may contain 1, 2 or 3 heteroatoms selected from the group consisting of O, N and S, which ring may be partially or fully substituted by R^{aa};
      - p: is 0, 1, 2 or 3;
      - R¹⁵: is hydrogen, OH, CN, C₁-C₁₂-alkyl, C₃-C₁₂-alkenyl, C₃-C₁₂-alkynyl, C₁-C₄-alkoxy, C₃-C₆-cycloalkyl, C₅-C₆-cycloalkenyl, NR^{A}R^{B}, S(O)ₙR^{y}, S(O)ₙNR^{A}R^{B}, C(=O)R²⁵, CON-R^{A}R^{B}, phenyl or a 5- or 6-membered monocyclic or 9- or 10-membered bicyclic aromatic heterocycle which contains 1, 2, 3 or 4 heteroatoms selected from the group consisting of O, N and S, where the cyclic groups are attached via D¹ and are unsubstituted or substituted by 1, 2, 3 or 4 groups R^{aa}, and also the following partially or fully R^{aa}-substituted groups: C₁-C₄-alkyl, C₃-C₄-alkenyl, C₃-C₄-alkynyl, C₁-C₄alkoxy, C₃-C₆-cycloalkyl, C₅-C₆-cycloalkenyl, NR^{A}R^{B}, S(O)ₙR^{y}, S(O)ₙNR^{A}R^{B}, C(=O)R²⁵, CONR^{A}R^{B};
      preferably is hydrogen, OH, CN, C₁-C₁₂-alkyl, C₃-C₁₂-alkenyl, C₃-C₁₂-alkynyl, C₁-C₄-alkoxy, C₃-C₆-cycloalkyl, C₅-C₆-cycloalkenyl, NR^{A}R^{B}, S(O)ₙR^{y}, S(O)ₙNR^{A}R^{B}, C(=O)R²⁵, CONR^{A}R^{B}, phenyl or a 5- or 6-membered monocyclic or 9- or 10-membered bicyclic aromatic heterocycle which contains 1, 2, 3 or 4 heteroatoms selected from the group consisting of O, N and S, where the cyclic groups are attached via D¹ and are unsubstituted or substituted by 1, 2, 3 or 4 groups R^{aa}, and also the following partially or fully R^{aa}-substituted groups: C₁-C₄-alkyl, C₃-C₄-alkenyl and C₃-C₄-alkynyl;
      R²⁵ is hydrogen, C₁-C₄-alkyl, C₁-C₄-haloalkyl, C₁-C₄-alkoxy or C₁-C₄-haloalkoxy;
      D¹ is carbonyl or a group D;
      where in groups R¹⁵, R^{a} and their sub-substituents the carbon chains and/or the cyclic groups may carry 1, 2, 3 or 4 substituents R^{aa} and/or R^{a1};
      - R¹⁶: is C₁-C₄-alkyl, C₃-C₄-alkenyl or C₃-C₄-alkynyl;
      - R¹⁷: is OH, NH₂, C₁-C₄-alkyl, C₃-C₆-cycloalkyl, C₃-C₆-alkenyl, C₃-C₆-alkynyl, C₁-C₄-hydroxyalkyl, C₁-C₄-cyanoalkyl, C₁-C₄-haloalkyl, C₁-C₄-alkoxy-C₁-C₄-alkyl or C(=O)R²⁵;
      - R¹⁸: is hydrogen, halogen, C₁-C₄-alkyl or C₁-C₄-haloalkyl, or R¹⁸ and R¹⁹ together are a covalent bond;
      - R¹⁹, R²⁰, R²¹, R²¹: independently of one another are hydrogen, halogen, OH, CN, NO₂, C₁-C₄-alkyl, C₁-C₄-haloalkyl, C₂-C₆-alkenyl, C₂-C₆-alkynyl, C₁-C₄-alkoxy, C₁-C₄-haloalkoxy, C₃-C₆-cycloalkyl, C₃-C₆-cycloalkenyl and C₃-C₆-cycloalkynyl;
      - R²³, R²⁴: independently of one another are hydrogen, halogen, OH, haloalkyl, NR^{A}R^{B}, NR^{A}C(O)R²⁶, CN, NO₂, C₁-C₄-alkyl, C₁-C₄-haloalkyl, C₂-C₄-alkenyl, C₃-C₆-alkynyl, C₁-C₄-alkoxy, C₁-C₄-haloalkoxy, O-C(O)R²⁶, phenoxy or benzyloxy, where in groups R²³ and R²⁴ the carbon chains and/or the cyclic groups may carry 1, 2, 3 or 4 substituents R^{aa};
      - R²⁶: is C₁-C₄-alkyl or NR^{A}R^{B};
   among the isoxazoline compounds of the piperazin compounds of formula III, preference is given to the piperazine compounds of the formula III, wherein
   - A: is phenyl or pyridyl where R^{a} is attached in the ortho-position to the point of attachment of A to a carbon atom;
   - R^{a}: is CN, NO₂, C₁-C₄-alkyl, C₁-C₄-haloalkyl, C₁-C₄-alkoxy, C₁-C₄-haloalkoxy or D-C(=O)-R^{a1};
   R^{y} is C₁-C₆-alkyl, C₃-C₄-alkenyl, C₃-C₄-alkynyl, NR^{A}R^{B} or C₁-C₄-haloalkyl and q is 0, 1 or 2;
   R^{A},R^{B} independently of one another are hydrogen, C₁-C₆-alkyl, C₃-C₆-alkenyl and C₃-C₆-alkynyl; together with the nitrogen atom to which they are attached, R^{A},R^{B} may also form a five- or six-membered saturated, partially or fully unsaturated ring which, in addition to carbon atoms, may contain 1, 2 or 3 heteroatoms selected from the group consisting of O, N and S, which ring may be substituted by 1 to 3 groups R^{aa};
   D is a covalent bond or C₁-C₄-alkylene;
   R^{a1} is hydrogen, OH, C₁-C₈-Alkyl, C₁-C₄-haloalkyl, C₃-C₆-cycloalkyl;
   R^{aa} is halogen, OH, CN, NO₂, C₁-C₄-alkyl, C₁-C₄-haloalkyl, C₁-C₄-alkoxy, C₁-C₄-haloalkoxy, S(O)_{q}R^{y}, D-C(=O)-R^{a1} and tri-C₁-C₄-alkylsilyl;
   - R^{b}: independently of one another is CN, NO₂, halogen, C₁-C₄-alkyl, C₁-C₄-haloalkyl, C₂-C₄-alkenyl, C₃-C₆-alkynyl, C₁-C₄-alkoxy, C₁-C₄-haloalkoxy, benzyl or S(O)_{q}R^{y}, R^{b} together with the group R^{a} or R^{b} attached to the adjacent ring atom may also form a five- or six-membered saturated or partially or fully unsaturated ring which, in addition to carbon atoms, may contain 1, 2 or 3 heteroatoms selected from the group consisting of O, N and S, which ring may be partially or fully substituted by R^{aa};
   - p: is 0 or 1;
   - R¹⁵: is hydrogen, C₁-C₁₂-alkyl, C₃-C₁₂-alkenyl, C₃-C₁₂-alkynyl, C₁-C₄-alkoxy or C(=O)R²⁵, which can be partially or fully substituted by R^{aa}-groups;
   preferably is hydrogen, C₁-C₁₂-alkyl, C₃-C₁₂-alkenyl, C₃-C₁₂-alkynyl, C₁-C₄-alkoxy or C(=O)R²⁵;
   R²⁵ is hydrogen, C₁-C₄-alkyl, C₁-C₄-haloalkyl, C₁-C₄-alkoxy or C₁-C₄-haloalkoxy; where in groups R¹⁵, R^{a} and their sub-substituents the carbon chains and/or the cyclic groups may carry 1, 2, 3 or 4 substituents R^{aa} and/or R^{a1};
   - R¹⁶: is C₁-C₄-alkyl;
   - R¹⁷: is OH, NH₂, C₁-C₄-alkyl, C₃-C₆-cycloalkyl, C₁-C₄-haloalkyl or C(=O)R²⁵;
   - R¹⁸: is hydrogen, or R¹⁸ and R¹⁹ together are a covalent bond;
   - R¹⁹, R²⁰, R²¹, R²¹: independently of one another are hydrogen;
   - R²³, R²⁴: independently of one another are hydrogen, halogen or OH;
b12) from the group of the decoupler herbicides:
   dinoseb, dinoterb and DNOC and its salts;
b13) from the group of the auxin herbicides:
   2,4-D and its salts and esters, 2,4-DB and its salts and esters, aminopyralid and its salts such as aminopyralid-tris(2-hydroxypropyl)ammonium and its esters, benazolin, benazolin-ethyl, chloramben and its salts and esters, clomeprop, clopyralid and its salts and esters, dicamba and its salts and esters, dichlorprop and its salts and esters, dichlorprop-P and its salts and esters, fluroxypyr, fluroxypyr-butometyl, fluroxypyr-meptyl, MCPA and its salts and esters, MCPA-thioethyl, MCPB and its salts and esters, mecoprop and its salts and esters, mecoprop-P and its salts and esters, picloram and its salts and esters, quinclorac, quinmerac, TBA (2,3,6) and its salts and esters, triclopyr and its salts and esters, and aminocyclopyrachlor and its salts and esters;
b14) from the group of the auxin transport inhibitors: diflufenzopyr, diflufenzopyr-sodium, naptalam and naptalam-sodium;
b15) from the group of the other herbicides: bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flampropmethyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methyl azide, methyl bromide, methyl-dymron, methyl iodide, MSMA, oleic acid, oxaziclomefone, pelargonic acid, pyributicarb, quinoclamine, triaziflam, tridiphane and 6-chloro-3-(2-cyclopropyl-6-methylphenoxy)-4-pyridazinol (CAS 499223-49-3) and its salts and esters.

Preferred herbicides B which can be used in combination with the benzoxazinones of the formula I according to the present invention are:
b1) from the group of the lipid biosynthesis inhibitors:
   clethodim, clodinafop-propargyl, cycloxydim, cyhalofop-butyl, diclofop-methyl, fenoxaprop-P-ethyl, fluazifop-P-butyl, haloxyfop-P-methyl, metamifop, pinoxaden, profoxydim, propaquizafop, quizalofop-P-ethyl, quizalofop-P-tefuryl, sethoxydim, tepraloxydim, tralkoxydim, benfuresate, dimepiperate, EPTC, esprocarb, ethofumesate, molinate, orbencarb, prosulfocarb, thiobencarb and triallate;
b2) from the group of the ALS inhibitors:
   amidosulfuron, azimsulfuron, bensulfuron-methyl, bispyribac-sodium, chlorimuron-ethyl, chlorsulfuron, cloransulam-methyl, cyclosulfamuron, diclosulam, ethametsulfuron-methyl, ethoxysulfuron, flazasulfuron, florasulam, flucarbazone-sodium, flucetosulfuron, flumetsulam, flupyrsulfuron-methyl-sodium, foramsulfuron, halosulfuron-methyl, imazamethabenz-methyl, imazamox, imazapic, imazapyr, imazaquin, imazethapyr, imazosulfuron, iodosulfuron, iodosulfuron-methyl-sodium, mesosulfuron, metazosulfuron, metosulam, metsulfuron-methyl, nicosulfuron, orthosulfamuron, oxasulfuron, penoxsulam, primisulfuron-methyl, propoxycarbazon-sodium, propyrisulfuron, prosulfuron, pyrazosulfuron-ethyl, pyribenzoxim, pyrimisulfan, pyriftalid, pyriminobacmethyl, pyrithiobac-sodium, pyroxsulam, rimsulfuron, sulfometuron-methyl, sulfosulfuron, thiencarbazone-methyl, thifensulfuron-methyl, triasulfuron, tribenuron-methyl, trifloxysulfuron, triflusulfuron-methyl and tritosulfuron;
b3) from the group of the photosynthesis inhibitors:
   ametryn, amicarbazone, atrazine, bentazone, bentazone-sodium, bromoxynil and its salts and esters, chloridazone, chlorotoluron, cyanazine, desmedipham, diquat-dibromide, diuron, fluometuron, hexazinone, ioxynil and its salts and esters, isoproturon, lenacil, linuron, metamitron, methabenzthiazuron, metribuzin, paraquat, paraquat-dichloride, phenmedipham, propanil, pyridate, simazine, terbutryn, terbuthylazine and thidiazuron;
b4) from the group of the protoporphyrinogen-IX oxidase inhibitors:
   acifluorfen-sodium, bencarbazone, benzfendizone, butafenacil, carfentrazone-ethyl, cinidonethyl, flufenpyr-ethyl, flumiclorac-pentyl, flumioxazin, fluoroglycofen-ethyl, fomesafen, lactofen, oxadiargyl, oxadiazon, oxyfluorfen, pentoxazone, pyraflufen-ethyl, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H-*pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1H-pyrazole-1-carboxamide (CAS 45100-03-7) and 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione;
b5) from the group of the bleacher herbicides:
   aclonifen, beflubutamid, benzobicyclon, clomazone, diflufenican, flurochloridone, flurtamone, isoxaflutole, mesotrione, norflurazon, picolinafen, pyrasulfotole, pyrazolynate, sulcotrione, tefuryltrione, tembotrione, topramezone, bicyclopyrone, 4-(3-trifluoromethylphenoxy)-2-(4-trifluoromethylphenyl)pyrimidine (CAS 180608-33-7), amitrole and flumeturon;
b6) from the group of the EPSP synthase inhibitors:
   glyphosate, glyphosate-isopropylammonium and glyphosate-trimesium (sulfosate);
b7) from the group of the glutamine synthase inhibitors:
   glufosinate, glufosinate-P, glufosinate-ammonium;
b8) from the group of the DHP synthase inhibitors: asulam;
b9) from the group of the mitose inhibitors:
   benfluralin, dithiopyr, ethalfluralin, oryzalin, pendimethalin, thiazopyr and trifluralin;
b10) from the group of the VLCFA inhibitors:
   acetochlor, alachlor, anilofos, butachlor, cafenstrole, dimethenamid, dimethenamid-P, fentrazamide, flufenacet, mefenacet, metazachlor, metolachlor, S-metolachlor, naproanilide, napropamide, pretilachlor, fenoxasulfone, ipfencarbazone, pyroxasulfone thenylchlor and isoxazolinecompounds of the formulae II.1, II.2, II.3, 11.4, II.5, II.6, II.7, II.8 and II.9 as mentioned above;
b11) from the group of the cellulose biosynthesis inhibitors: dichlobenil, flupoxam, isoxaben, 1-Cyclohexyl-5-pentafluorphenyloxy-1⁴-[1,2,4,6]thiatriazin-3-ylamine and the piperazine compounds of formula III as mentioned above;
b13) from the group of the auxin herbicides:
   2,4-D and its salts and esters, aminopyralid and its salts such as aminopyralid-tris(2-hydroxypropyl)ammonium and its esters, clopyralid and its salts and esters, dicamba and its salts and esters, dichlorprop-P and its salts and esters, fluroxypyr-meptyl, MCPA and its salts and esters, MCPB and its salts and esters, mecoprop-P and its salts and esters, picloram and its salts and esters, quinclorac, quinmerac, triclopyr and its salts and esters, and aminocyclopyrachlor and its salts and esters;
b14) from the group of the auxin transport inhibitors: diflufenzopyr and diflufenzopyr-sodium;
b15) from the group of the other herbicides: bromobutide, cinmethylin, cumyluron, dalapon, difenzoquat, difenzoquat-metilsulfate, DSMA, dymron (= daimuron), flamprop, flamprop-isopropyl, flamprop-methyl, flamprop-M-isopropyl, flamprop-M-methyl, indanofan, indaziflam, metam, methylbromide, MSMA, oxaziclomefone, pyributicarb, triaziflam, tridiphane and 6-chloro-3-(2-cyclopropyl-6-methylphenoxy)-4-pyridazinol (CAS 499223-49-3) and its salts and esters.

Particularly preferred herbicides B which can be used according to the present invention are:
b1) from the group of the lipid biosynthesis inhibitors: clodinafop-propargyl, cycloxydim, cyhalofop-butyl, fenoxaprop-P-ethyl, pinoxaden, profoxydim, tepraloxydim, tralkoxydim, esprocarb, prosulfocarb, thiobencarb and triallate;
b2) from the group of the ALS inhibitors: bensulfuron-methyl, bispyribac-sodium, cyclosulfamuron, diclosulam, flumetsulam, flupyrsulfuron-methyl-sodium, foramsulfuron, imazamox, imazapic, imazapyr, imazaquin, imazethapyr, imazosulfuron, iodosulfuron, iodosulfuron-methyl-sodium, mesosulfuron, metazosulfuron, nicosulfuron, penoxsulam, propoxycarbazon-sodium, pyrazosulfuron-ethyl, pyroxsulam, rimsulfuron, sulfosulfuron, thiencarbazon-methyl and tritosul-furon;
b3) from the group of the photosynthesis inhibitors: ametryn, atrazine, diuron, fluometuron, hexazinone, isoproturon, linuron, metribuzin, paraquat, paraquat-dichloride, propanil, terbutryn and terbuthylazine;
b4) from the group of the protoporphyrinogen-IX oxidase inhibitors: flumioxazin, oxyfluorfen, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100) and 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione;
b5) from the group of the bleacher herbicides: clomazone, diflufenican, flurochloridone, isoxaflutole, mesotrione, picolinafen, sulcotrione, tefuryltrione, tembotrione, topramezone, bicyclopyrone, amitrole and flumeturon;
b6) from the group of the EPSP synthase inhibitors: glyphosate, glyphosate-isopropylammonium and glyphosate-trimesium (sulfosate);
b7) from the group of the glutamine synthase inhibitors: glufosinate, glufosinate-P and glufosinate-ammonium;
b9) from the group of the mitose inhibitors: pendimethalin and trifluralin;
b10) from the group of the VLCFA inhibitors: acetochlor, cafenstrole, dimethenamid-P, fentrazamide, flufenacet, mefenacet, metazachlor, metolachlor, S-metolachlor, fenoxasulfone, ipfencarbazone and pyroxasulfone; likewise, preference is given to isoxazoline compounds of the formulae II.1, II.2, II.3, II.4, II.5, II.6, II.7, II.8 and II.9 as mentioned above;
b11) from the group of the cellulose biosynthesis inhibitors: isoxaben and the piperazine compounds of formula III as mentioned above;
b13) from the group of the auxin herbicides: 2,4-D and its salts and esters, aminopyralid and its salts and its esters, clopyralid and its salts and esters, dicamba and its salts and esters, fluroxy-pyr-meptyl, quinclorac, quinmerac and aminocyclopyrachlor and its salts and esters;
b14) from the group of the auxin transport inhibitors: diflufenzopyr and diflufenzopyr-sodium,
b15) from the group of the other herbicides: dymron (= daimuron), indanofan, indaziflam, oxaziclomefone and triaziflam.

Safeners are chemical compounds which prevent or reduce damage on useful plants without having a major impact on the herbicidal action of the benzoxazinones of the formula (I) towards unwanted plants.

Suitable safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1 H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

Examples of preferred safeners C are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Especially preferred safeners C are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Particularly preferred safeners C are benoxacor, cloquintocet, cyprosulfamide, dichlormid, fenchlorazole, fenclorim, furilazole, isoxadifen, mefenpyr, 4-(dichloroacetyl)-1-oxa-4-azaspiro-[4.5]decane (MON4660, CAS 71526-07-3) and 2,2,5-trimethyl-3-(dichloroacetyl)-1,3-oxazolidine (R-29148, CAS 52836-31-4).

The active compounds B of groups b1) to b15) and the active compounds C are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660. Further herbicidally active compounds are known from WO 96/26202, WO 97/41116, WO 97/41117, WO 97/41118 and WO 01/83459 and also from W. Krämer et al. (ed.) "Modern Crop Protection Compounds", Vol. 1, Wiley VCH, 2007 and the literature cited therein.

The assignment of the active compounds to the respective mechanisms of action is based on current knowledge. If several mechanisms of action apply to one active compound, this substance was only assigned to one mechanism of action.

If the herbicides B and/or the safener C are capable of forming geometrical isomers, for example E/Z isomers, both the pure isomers and mixtures thereof may be used in the compositions according to the invention. If the herbicides B and/or the safener C have one of more centers of chirality and are thus present as enantiomers or diastereomers, both the pure enantiomers and diastereomers and mixtures thereof may be used in the compositions according to the invention.

If the herbicides B and/or the safener C have ionizable functional groups, they can also be employed in the form of their agriculturally acceptable salts. Suitable are, in general, the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trime-thylammonium, tetramethylammonium, tetraethylammonium, tetrabutylammonium, 2-hydroxyethylammonium, 2-(2-hydroxyeth-1-oxy)eth-1-ylammonium, di(2-hydroxyeth-1-yl)-ammonium, benzyltrimethylammonium, benzyltriethylammonium, furthermore phosphonium ions, sulfonium ions, preferably tri(C₁-C₄-alkyl)sulfonium, such as trimethylsulfonium, and sulfoxonium ions, preferably tri(C₁-C₄-alkyl)sulfoxonium.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of C₁-C₄-alkanoic acids, preferably formate, acetate, propionate and butyrate.

Active compounds B and C having a carboxyl group can be employed in the form of the acid, in the form of an agriculturally suitable salt or else in the form of an agriculturally acceptable derivative in the compositions according to the invention, for example as amides, such as mono- and di-C₁-C₆-alkylamides or arylamides, as esters, for example as allyl esters, propargyl esters, C₁-C₁₀-alkyl esters, alkoxyalkyl esters and also as thioesters, for example as C₁-C₁₀-alkylthio esters. Preferred mono- and di-C₁-C₆-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred C₁-C₄-alkoxy-C₁-C₄-alkyl esters are the straight-chain or branched C₁-C₄-alkoxy ethyl esters, for example the methoxyethyl, ethoxy-ethyl or butoxyethyl ester. An example of a straight-chain or branched C₁-C₁₀-alkylthio ester is the ethylthio ester.

Preferably, the optional further herbicide B and/or safener C is soluble in water up to 10 g/l, preferably up to 5 g/l, and in particular up to 2 g/l, at 20 °C.

In one form the optional further herbicide B and/or safener C is liquid at room temperature (e.g. 20 °C), like e.g. dimethenamide, dimethenamide-P, clomazone, S-metolachlor.

In another form the optional further herbicide B and/or safener C also can have a melting point above room temperature, like e.g. pendimethalin 58°C.

The benzoxazinone of formula (I) and optionally at least one further active compound selected from herbicides B and safeners C may be present in the core in dissolved form, as suspension, emulsion or suspoemulsion.
Preferably, the benzoxazinone of formula (I) is present in dissolved form. Also preferably, the optional at least one further active compound selected from herbicides B and safeners C are present in dissolved form.

The core usually contains at least 10 wt%, preferably at least 30 wt% and in particular at least 50 wt% of total sum of the benzoxazinone of formula (I) present in the core and the further active compound selected from herbicides B and safeners C present in the core, based on the total amount of the core materials. The core may contain up to 100 wt%, preferably up to 70 wt% of the benzoxazinone of formula (I) present in the core or the further active compound selected from herbicides B and safeners C present in the core. The amount of core materials is typically summed up from the amounts of all pesticides and any solvents in the core.

The core usually contains at least 0.5 wt%, preferably at least 1.5 wt% and in particular at least 3 wt% of the benzoxazinone of formula (I) present in the core, based on the total amount of the core materials. The core may contain up to 100 wt%, preferably up to 50 wt%, and in particular up to 20 wt% of the benzoxazinone of formula (I) present in the core.

The core usually contains at least 30 wt%, preferably at least 45 wt% and in particular at least 65 wt% of total sum of the further active compound selected from herbicides B and safeners C present in the core, based on the total amount of the core materials. The core may contain up to 99.5 wt%, preferably up to 97 wt% of the further active compound selected from herbicides B and safeners C present in the core. The amount of core materials is typically summed up from the amounts of all pesticides and any solvents in the core.

The core of the microcapsules optionally comprises a solvent. Preferably, the core comprises a solvent, such as a water-immiscible solvent. "Solvent" in this case may mean that the solvent is able to form a homogeneous mixture with the benzoxazinone of formula (I) or dissolve it.

Examples for suitable solvents are mineral oil fractions of medium to high boiling point, such as kerosene or diesel oil, furthermore coal tar oils and oils of vegetable or animal origin, fatty acid glycerides or their methyl or ethyl ester derivatives, commonly called methyl- or ethyl oleate, aliphatic, cyclic and aromatic hydrocarbons, e. g. toluene, xylene, paraffin, tetrahydronaphthalene, alkylated naphthalenes or their derivatives. Preferred organic solvents are a fatty acid glycerides or their methyl or ethyl ester derivatives and/or a hydrocarbons. In particular preferred solvents are fatty acid glycerides or their methyl or ethyl ester derivatives. Mixtures of organic solvents may also be used.

Preferably the core of the microcapsules comprises a water-immiscible solvent. Preferably, the solvent has a solubility in water of up to 20 g/l at 20 °C, more preferably of up to 5 g/l and in particular of up to 0.5 g/l. Usually, the solvent has a boiling point above 100°C, preferably above 150 °C, and in particular above 180 °C (at 1 bar).

The weight ratio of the total sum of all pesticides in the core (e.g. the benzoxazinone of formula (I) present in the core and optionally of the further active compound selected from herbicides B and safeners C present in the core) to the sum of all solvents in the core is typically from 5 : 1 to 1 : 10, preferably from 3 : 1 to 1 : 2, more preferably from 2 : 1 to 1 : 1.

The core may optionally contain auxiliaries, such as those mentioned below. Preferably, the core contains at least one adjuvant (for example organic modified polysiloxanes such as Break Thru S 240®; alcohol alkoxylates such as Atplus® 245, Atplus® MBA 1303, Plurafac® LF 300 and Lutensol® ON 30; EO/PO block polymers, Poloxamers, e. g. Pluronic® RPE 2035 and Genapol® B; alcohol ethoxylates such as Lutensol® XP 80; and dioctyl sulfosuccinate sodium such as Leophen® RA).

The composition may be present in any physical state, such as liquid or solid. Preferably, the composition is a liquid, e.g. at 20 °C. T

The composition may be a non-aqueous or aqueous composition. Preferably, the composition is an aqueous composition. The aqueous composition may comprise at least 15 wt%, preferably at least 25 wt%, and in particular at least 35 wt% water. The aqueous composition comprises usually an aqueous phase, which is usually a continuous aqueous phase. The composition may comprise at least one further phase, such as at least one a discontinuous solid phase (e.g. the microcapsules, or suspended pesticide particles).

The composition comprises typically in the aqueous phase the microcapsules, and optionally a sulfonate (e.g. lignosulfonate) and/or a codispersant. Typically, the composition comprises in the continuous aqueous phase the microcapsules in form of as discontinuous phase, such as suspended microcapsules. The aqueous composition contains usually from 1 to 90 wt% of the microcapsules, preferably from 3 to 80 wt%, and in particular 10 to 70 wt%. The aqueous composition contains usually at least 1 wt% encapsulated pesticide, preferably at least 3 wt% and in particular at least 10 wt%.

In one form the aqueous composition comprises in the aquous phase a sulfonate selected from lignosulfonate, naphthalene sulfonate formaldehyde condensate, or mixtures thereof. Typically, the composition comprises in the continuous aqueous phase the sulfonate in dissolved form. The sulfonate is selected from lignosulfonate, naphthalene sulfonate formaldehyde condensate, or mixtures thereof. Preferably, the sulfonate is selected from lignosulfonate or mixtures of lignosulfonate and naphthalene sulfonate formaldehyde condensate. In particular, the sulfonate is lignosulfonate.

Lignosulfonates are known and are defined, for example, in Roempp's dictionary of chemistry, 9th Edition, volume 3, Georg-Thieme Verlag, Stuttgart, New York 1990, page 2511. Lignosulfonates which are suitable are the alkali metal salts and/or alkaline earth metal salts and/or ammonium salts, for example the ammonium, sodium, potassium, calcium or magnesium salts of lignosulfonic acid. The sodium, potassium or calcium salts are preferably used, the sodium, potassium and/or calcium salts are very particularly preferably used. Naturally, the term lignosulfonates also encompasses mixed salts of different ions, such as potassium/sodium lignosulfonate, potassium/calcium lignosulfonate and the like, in particular sodium/calcium lignosulfonate.

The molecular mass of the lignosulfonate may vary from 500 to 200,000 Da. Preferably, the lignosulfonate has a molecular weight of 700 to 50,000 Da, more preferably from 900 to 20,000 Da, and in particular from 1000 to 10,000 Da.

The lignosulfonate is usually soluble in water (e.g. at 20 °C), e.g. at least 5 wt%, preferably at least 10 wt%, and in particular at least 20 wt%.

Naphthalene sulfonate formaldehyde condensates are oligomers obtainable by reaction (e.g. polycondensation) of naphthalene sulfonate and formaldehyde. The naphthalene sulfonate formaldehyde condensates has usually a molecular mass of 300 to 10,000 Da, preferably of 500 to 5000 Da, and in particular of 500 to 2500 Da. The naphthalene group may optionally substituted by a linear or branched C₁-C₈ alkyl. The naphthalene sulfonate formaldehyde condensates is usually soluble in water (e.g. at 20 °C), e.g. at least 5 wt%, preferably at least 10 wt%, and in particular at least 20 wt%. Naphthalene sulfonate formaldehyde condensates which are suitable are the alkali metal salts and/or alkaline earth metal salts and/or ammonium salts, for example the ammonium, sodium, potassium, calcium or magnesium salts of lignosulfonic acid. The sodium, potassium or calcium salts are preferably used, the sodium, potassium and/or calcium salts are very particularly preferably used.

The composition may comprise from 0.05 to 15 wt%, preferably from 0.1 to 5 wt%, and in particular from 0.3 to 3 wt% of the sufonate (e.g. the lignosulfonate).

The aqueous composition may comprise in the aqueous phase a codispersant of the formula (A)

R^{A1}-O-(CₙH₂ₙO)ₓ-(CₘH₂ₘO)_{y}-X (A)

in which
- R^{A1}: is a C₆-C₁₈ unit;
- X: is -P(O)(R^{A2})(OH), -CH₂-CH₂-PO₃H₂, -CH₂-CH₂-CO₂H, -SO₃H, -CH₂-CH₂-CH₂-SO₃H, or salts thereof;
- R^{A2}: is R^{A1}-O-(CₙH₂ₙO)ₓ-(CₘH₂ₘO)_{y}- or -OH;
- n, m: independently of one another are a value of from 2 to 6;
- x, y: independently of one another are a value of from 0 to 100; and
- x+y: gives a value of from 1 to 100.

Typically, the composition comprises in the continuous aqueous phase the codispersant in dissolved form.

R^{A1} is usually a monovalent C₆-C₁₈ alkyl, C₆-C₁₈ aryl or C₆-C₁₈ alkyaryl, where C₆-C₁₈ alkyl is preferred. The alkyl groups may be linear or branched, saturated or unsaturated. Typically, R^{A1} is a hydrocarbon (i.e. it is free of heteroatoms). Mixtures of different groups are also possible, such as mixtures of different alkyl chain lenghts, and/or of saturated and unsaturated groups.

Examples for R^{A1} being C₆-C₁₈ aryl are phenyl or naphthyl.

Examples for R^{A1} being C₆-C₁₈ alkyaryl are C₁-C₁₂ alkylphenyl or C₁-C₈ naphthyl.

Preferably, R^{A1} is a linear or branched, saturated or unsaturated C₆-C₁₈ alkyl, wherein C₈-C₁₆ alkyl is more preferred. In particular, R^{A1} is linear or branched, saturated C₁₀-C₁₆ alkyl. Typical examples for R^{A1} are linear or branched decyl, undecyl, dodecyl, tridecyl, tetradecyl, hexadecyl, heptadecyl and octadecyl, or mixture of the aforementioned residues.

X is preferably -P(O)(R^{A2})(OH) or CH₂-CH₂-CH₂-SO₃H; wherein -P(O)(R^{A2})(OH) is more preferred.

R^{A2} is R^{A1}-O-(CₙH₂ₙO)ₓ-(CₘH₂ₘO)_{y}- or -OH. Mixtures thereof are also possible.
In one form R^{A2} is -OH. In another form R^{A2} is R^{A1}-O-(CₙH₂ₙO)ₓ-(CₘH₂ₘO)_{y}-.

The indices n and m are preferably independently of one another a value from 2 to 5, especially preferably 2 to 4 and in particular 2 or 3. The indices n and m usually are different values. The indices n and m usually are values that are integers.

The indices x and y are preferably independently of one another a value from 0 to 70, especially preferably a value from 0 to 50 and in particular a value of from 0 to 40.

The sum of x+y preferably gives a value from 3 to 70, especially preferably from 5 to 50 and in particular from 10 to 40.

In a form n and m are independently of one another are a value of from 2 or 3; x and y are independently of one another are a value of from 0 to 50; and x+y gives a value of from 5 to 50.

In a form n is 2 and m is 3; x is a value of from 1 to 50 and y is a value from 0 to 20; and x+y gives a value of from 5 to 50.

Within the unit "R^{A1}-O-(CₙH₂ₙO)ₓ-(CₘH₂ₘO)_{y}-" the alkoxy units "(CₙH₂ₙO)ₓ" and "(CₘH₂ₘO)_{y}" may occur in any order, for example randomly distributed or blockwise (such as A-B or A-B-A).

The composition may comprise from 0.05 to 15 wt%, preferably from 0.1 to 5 wt%, and in particular from 0.3 to 3 wt% of the codispersant.

In another form R^{A1} is a linear or branched, saturated or unsaturated C₆-C₁₈ alkyl; X is -P(O)(R^{A2})(OH) or -CH₂-CH₂-SO₃H; R^{A2} is R^{A1}-O-(CₙH₂ₙO)ₓ-(CₘH₂ₘO)_{y}- or -OH; n and m are independently of one another are a value of from 2 or 3; x and y are independently of one another are a value of from 0 to 50; and x+y gives a value of from 5 to 50.

In another form R^{A1} is linear or branched, saturated C₁₀-C₁₆ alkyl; X is -P(O)(R^{A2})(OH) or -CH₂-CH₂-SO₃H; R^{A2} is R^{A1}-O-(CₙH₂ₙO)ₓ-(CₘH₂ₘO)_{y}- or -OH; n is 2 and m is 3; x is a value of from 1 to 50 and y is a value from 0 to 20; and x+y gives a value of from 5 to 50.

The codispersant of formula (I) may be present in protonated form, e.g. where X is -P(O)(R^{A2})(OH), -CH₂-CH₂-PO₃H₂, -CH₂-CH₂-CO₂H, -SO₃H, or -CH₂-CH₂-CH₂-SO₃H. It is understood that depending on the pH of the aqueous composition the protonated form may partially be deprotonated and form a salt. The salt form of the codispersant is also encompassed within formula (I). Suitable salt forms of the codispersant are alkali metal salts and/or alkaline earth metal salts and/or ammonium salts, for example the ammonium, sodium, potassium, calcium or magnesium salts. The sodium and potassium salts are preferred.

The codispersant is usually soluble in water, e.g. at 20 °C, to at least 10 g/l, preferably at least 50 g/l and in particular at least 100 g/l.

In a preferred form, the aqueous composition comprises the sulfonate selected from lignosulfonate, naphthalene sulfonate formaldehyde condensate, or mixtures thereof; and the codispersant of the formula (A). The weight ratio of the sufonate (e.g. the lignosulfonate) to the codispersant may vary from 8:1 to 1:8, preferably from 4:1 to 1:4, and in particular from 2,5:1 to 1:1,5.

The aqueous composition according to the invention may also comprise auxiliaries which are customary in agrochemical formulations. The auxiliaries used depend on the particular application form and active substance, respectively. Examples for suitable auxiliaries are dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

The auxiliaries are usually different from the sulfonate and the codispersant of the formula (I).

Examples for suitable auxiliaries are solvents, liquid carriers, solid carriers or fillers, surfactants, further dispersants, emulsifiers, wetters, further adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable nonionic surfactants are alkoxylate surfactants, N-subsituted fatty acid amides, amine oxides, esters, sugar-based surfactants, polymeric surfactants, and mixtures thereof. Examples of alkoxylate surfactants are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable further adjuvants are compounds, which have a neglectable or even no pesticidal activity themselves, and which improve the biological performance of the pesticide on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, polyethers, isocyanate-linked polyethers, polyvinyl alcohols, and silicates.

Suitable bactericides are bronopol and isothiazolinone derivatives such as alkylisothiazolinones and benzisothiazolinones. Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable tackifiers or binders are polyvinylpyrrolidons, polyvinylacetates, polyvinyl alcohols, polyacrylates, biological or synthetic waxes, and cellulose ethers.

The composition may comprise at least one further active compound selected from the group of herbicides B and/or safeners C outside the microcapsules. This non-encapsulated pesticide may be present in dissolved form, or as a suspension, emulsion or suspoemulsion. The aqueous composition contains usually at least 1 wt% non-encapsulated pesticide, preferably at least 3 wt% and in particular at least 10 wt%. The aqueous composition contains usually up to 50 wt% non-encapsulated pesticide, preferably up to 35 wt% and in particular up to 20 wt%.

The present invention furthermore relates to a method of preparing microcapsules or composition comprising such microcapsules according to the invention by polycondensation of a polyisocyanate and a polyamine, optionally in the presence of the sulfonate and/or the codispersant of the formula (A). Further details of the polycondensation are described above.

The present invention furthermore relates to a method of controlling undesired vegetation, which comprises allowing microcapsules, or composition comprising such microcapsules, comprising a herbicidal active amount of at least one benzoxazinones of the formula (I) to act on plants, their environment or on seed.

The microcapsules contain in the core the benzoxazinone of formula (I) usually in a herbicidal active amount.

When employed in plant protection, the amounts of active substances applied are, depending on the kind of effect desired, from 0.001 to 6 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

Various types of oils, wetters, adjuvants, fertilizer, or micronutrients, and other pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The concentration of the codispersant of the formula (I) in the ready-to-use preparation (e.g. the tank mix) is in most cases in the range of from 0.01 to 50 g/l, preferably 0.08 to 10 g/l and in particular 0.5 to 8 g/l.

The concentration of water in the ready-to-use preparation (e.g. the tank mix) is in most cases at least 60 wt%, preferably at least 75 wt%, and in particular at least 90 wt%.

The tank mix is usually an aqueous liquid, which is ready to be applied (e.g. by spraying) in the method of controlling phytopathogenic fungi and/or undesired vegetation and/or undesired insect or mite attack and/or for regulating the growth of plants.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, very preferably 50 to 200 liters of the ready-to-use spray liquor are applied per hectare of agricultural useful area.

The advantages of the invention are that the average particle size D₅₀ of the microcapsules can be very low; that the average particle size D₅₀ of the microcapsules can be very narrow; that the average particle size D₅₀ of the microcapsules can be very low and narrow; that when the microcapsules are synthesized in the aqueous phase a high percentage of the benzoxazinone of formula (I) is encapsulated; that the benzoxazinone of formula (I) is released over a long period; that the composition exhibits a reduced phytotoxicity.

The examples which follow illustrate the invention without imposing any limitation.

### Examples

| | |
|---|---|
| Lignosulfonate A: | sodium lignine sulfonate, powder, soluble in water, average molecular weight 2700-3100 Da, total sulfur about 10-11 %. |
| Wetting Agent: | alkyl naphthalenesulfonic acid condensate, sodium, 30% in water. |
| Pesticide A: | Benzoxazinone of formula (I.a.35). |
| Polyisocyanate A: | polyisocyanated based on 4,4'-diphenylmethane diisocyanate (MDI) containing oligomers of high functionality and isomers, solvent-free liquid, average functionality 2.7, NCO-content 32 g/100 g. |
| Biocide: | Mix of 2-methyl-4-isothiazolin-3-one and 1,2-benzisothiazolin-3-one |
| Defoamer: | Silicone based defoamer. |
| Codispersant A: | codispersant of formula (I), where R^{A1} is C₁₀₋₁₆ alkyl; X is -P(O)(R^{a})(OH); R^{a} is R^{A1}-O-(CₙH₂ₙO)ₓ-(CₘH₂ₘO)_{y}- or -OH; n is 2 and m is 3; x is about 10-15 and y is about 0 to 5; about 70-80 wt% in water, pH about 1-3. |
| Codispersant B: | codispersant of formula (I), where R^{A1} is C₁₂₋₁₄ alkyl; X is - SO₃Na; n is 2; x is about 25-35 and y is 0; sodium salt; about 30 wt% in water. |

### Example 1 (comparative, without codispersant)

Preparation of the water phase: To 1311 g water were added 36g lignosulfonate, 18g Wetting Agent and the pH adjusted to about 11.5
Preparation of the oil phase: 1142g Dimethenamide-P was mixed with 300g corn oil and 72.5g Pesticide A. After a homogenous solution has been obtained, 47.7g Polyisocyanate A was added.
Preparation of the amine phase: A 25 w% solution of 1,6-hexamethylene diamine in water was prepared.
Finish solution: A slurry of 6g Biocide, 3g xanthan gum, 1.8g Defoamer in 200 g water was prepared.
Preparation of the emulsion and encapsulation: Above oil phase was added at 20-25°C to above water phase and emulsified using high-shear equipment. After emulsification, the emulsification device was replaced by a low shear stirrer and 72g of the amine phase was added. Subsequently, the dispersion was allowed to rest 30 minutes at room temperature. Under stirring the finish solution was added to the capsule dispersion and the pH adjusted to pH 6 by addition of acetic acid.

### Example 2 (comparative, codispersant Soprophor® FLK)

The sample was prepared as described in the Comparative Example 1, wherein 30 g of Soprophor® FLK were added when preparing the water phase.

### Example 3 (comparative, codispersant Morwet® D425)

The sample was prepared as described in the Comparative Example 1, wherein 30 g of Morwet® D425 were added when preparing the water phase.

During the encapsulation step a cheese-like solid matter formed which is not applicable.

### Example 4

The sample was prepared as described in the Comparative Example 1, wherein 30 g of Codispersant A were added when preparing the water phase.

### Example 5

The sample was prepared as described in the Comparative Example 1, wherein 30 g of Codispersant B were added when preparing the water phase.

### Example 6 - Particle size and free pesticide

The particle size distribution of samples from Examples 1-5 was determined by static laser scattering with a Malvern Mastersizer 2000 according to the European norm ISO 13320 EN. The data were treated according to the Mie-Theory by a software using a "universal model" provided by Malvern Instruments. Important parameters are the dₙ-values which denote the scattering diameter, below which n vol.-% are found. Relevant are the d-values for n=10, 50 and 90, the d₁₀, d₅₀, and d₉₀-values. The results were summarized in Table 1.

The amount of free pesticide, which was not encapsulated in the samples of Examples 1-5, was determined as follows: First, a 10 w% solution of poloxamer 335 (Pluronic® PE 10500) was prepared which was adjusted to pH 5 with acetic acid. This solution acted as receiver solution for non- or not well encapsulated droplets of the oil phase. To 250 ml of the receiver solution was added 125 mg of the microcapsule formulation and stirred for 10 minutes. Subsequently, a sample was drawn through a 0.2 µm Teflon filter to remove intact microcapsules. In the filtrate, the amount of Pesticide A was determined by reverse phase HPLC and normalized in a way that the entire amount of Pesticide A would account for 100% (= 100% "free herbicide", this is found, e.g., if no encapsulation would have taken place at all). The results were summarized in Table 1.

**Table 1**

| | Example 1^{a)} | Example 2^{a)} | Example 3^{a),b)} | Example 4 | Example 5 |
|---|---|---|---|---|---|
| d10[µm] | 39 | 1 | - | 1 | 1 |
| d10[µm] | 55 | 6 | - | 7 | 8 |
| d10[µm] | 75 | 15 | - | 21 | 18 |
| Free Pesticide [%] | 1 | 45 | - | 4 | 8 |

| | | | | | |
|---|---|---|---|---|---|
| a) comparative. b) no microcapsules were formed with the tested codispersant. | | | | | |

In comparative Example 1 without codispersant only microcapsules with a large particle size were prepared. Comparative Example 2 and 3 with codispersant different from the codispersant of formula (I) either a high percentage of pesticide was not encapsulated, or the encapsulation procedure resulted in a cheese-like solid which was not useful. Only by using the codispersant of formula (I) in Examples 4 and 5 small microcapsules as well as a low percentage of free pesticide was achieved.

## Claims

1. Microcapsules having a polyurea-shell and a core, wherein the core contains a benzoxazinone of formula (I) 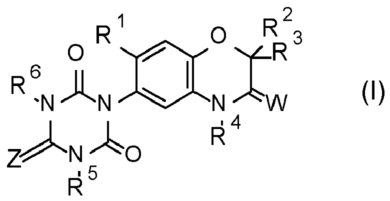 wherein
R¹ is hydrogen or halogen;
R² is halogen;
R³ is hydrogen or halogen;
R⁴ is hydrogen, C₁-C₆-alkyl, C₁-C₆-haloalkyl, C₃-C₆-cycloalkyl, C₃-C₆-alkenyl, C₃-C₆-haloalkenyl, C₃-C₆-alkynyl, C₃-C₆-haloalkynyl, C₁-C₆-alkoxy or C₃-C₆-cycloalkyl-C₁-C₆-alkyl;
R⁵ is hydrogen, NH₂, C₁-C₆-alkyl or C₃-C₆-alkynyl;
R⁶ is hydrogen or C₁-C₆-alkyl;
W is O or S; and
Z is O or S.

2. Microcapsules as claimed in claim 1, wherein the benzoxazinone of formula (I) is the benzoxazione I.a.35

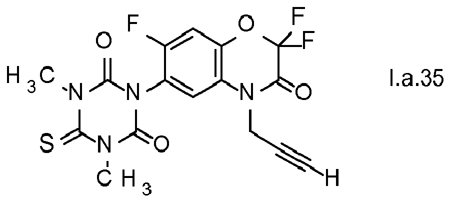

3. Microcapsules as claimed in claim 1 or 2, wherein the microcapsules have an average particle size D₅₀ of 1 to 20 µm.

4. Microcapsules according to any of claims 1 to 3, wherein the polyurea shell contains a polyisocyanate and a polyamine in polycondensed form.

5. Microcapsules as claimed in any of claims 1 to 4, wherein the core comprises a water-immiscible solvent.

6. Microcapsules as claimed in claim 5, wherein the solvent comprises a fatty acid glycerides or their methyl or ethyl ester derivatives.

7. Microcapsules as claimed in claims 1 to 6, wherein the core contains additionally at least one further active compound selected from the group of herbicides B and/or safeners C.

8. Microcapsules as claimed in claim 7, wherein the at least one herbicide B and/or safener C is soluble in water up to 10 g/l.

9. Microcapsules as claimed in claims 1 to 8, wherein the weight ratio of all pesticides in the core to the sum of all solvents in the core is from 5 : 1 to 1 : 10.

10. A herbicidal composition comprising microcapsules as claimed in any of claims 1 to 9.

11. The composition as claimed in claim 10, comprising at least one further active compound selected from the group of herbicides B and/or safeners C outside the microcapsules.

12. The composition as claimed in any of claims 10 to 11, wherein the composition is an aqueous composition, which comprises an aqueous phase.

13. The composition as claimed in claim 12, comprising in the aqueous phase a sulfonate selected from lignosulfonate, naphthalene sulfonate formaldehyde condensate, or mixtures thereof.

14. The composition as claimed in claim 12 or 13 comprising in the aqueous phase a codispersant of the formula (II)
R^{A1}-O-(CₙH₂ₙO)ₓ-(CₘH₂ₘO)_{y}-X (II)
wherein
R^{A1} is a C₆-C₁₈-unit;
X is -P(O)(R^{A2})(OH), -CH₂-CH₂-PO₃H₂, -CH₂-CH₂-CO₂H, -SO₃H, or -CH₂-CH₂-CH₂-SO₃H;
where R^{A2} is R^{A1}-O-(CₙH₂ₙO)ₓ-(CₘH₂ₘO)_{y}- or -OH;
m, n independently of one another are a value of from 2 to 6;
x, y independently of one another are a value of from 0 to 100; and x+y gives a value of from 1 to 100.

15. Process for preparing microcapsules according to claims 1 to 9, or compositions according to claims 12 to 14, by polycondensation of a polyisocyanate and a polyamine, optionally in the presence of the sulfonate and/or the codispersant of the formula (A).

16. A method of controlling undesired vegetation, which comprises allowing microcapsules according to claims 1 to 9, or compositions according to 12 to 14, to act on plants, their environment or on seed.
